# EUROPÄISCHE PATENTANMELDUNG

(11) **EP 3 336 263 A1**
(43) Veröffentlichungstag der Anmeldung: **20.06.2018**
(21) Anmeldenummer: 17206234.1
(22) Anmeldetag: 08.12.2017
(51) Int. Cl.: E02F 3/815, A01B 19/02, A01B 23/00, A01B 23/04, A01B 35/06, A01B 35/12, A01B 35/24, A01B 45/00, A01B 49/02, A01D 7/08

(54) **ANBAUGERÄT FÜR EINE ARBEITSMASCHINE**

(30) Priorität: 09.12.2016 CH 16302016
(71) Anmelder: Martin GmbH, 6751 Braz (AT)
(72) Erfinder: KLETZENBAUER, Herbert, 4271 St. Oswald bei Freistadt (AT)
(74) Vertreter: Riederer Hasler & Partner Patentanwälte AG

(57) **Zusammenfassung**

Die Erfindung betrifft ein einen Baggeranbaurechen (11) umfassend ein Kupplungsteil (25), mit welchem das Anbaugerät (11) an einer Arbeitsmaschine mechanisch ankuppelbar ist, und einen Grundkörper (13) mit einer ersten und einer zweiten Montagfläche (15,17). Das Kupplungsteil (25) ist an der ersten Montagefläche (15) angeordnet und an der zweiten Montagefläche (17) sind Rechenzähne (37) befestigt, welche in einer Mehrzahl von Reihen (51a,51b,51c) angeordnet sind. Das Kupplungsteil ist ein Baggerarm-Kupplungsteil (25).

## Beschreibung

### Gebiet der Erfindung

Die Erfindung betrifft ein Anbaugerät für ein Arbeitsmaschine, insbesondere für einen Bagger, gemäss Oberbegriff des Anspruchs 1.

### Stand der Technik

In der CA1098757A ist eine Egge offenbart, welche von einem Traktor über ein Feld gezogen werden kann. Die Egge lässt sich also an einem Traktor ankuppeln, zerkleinert Erdklumpen und ebnet das Feld. Die Egge umfasst einen vorgespannten Hebelarm, welcher zwischen einer Plattenanordnung und einem Zinkenhalter schwenkbar angeordnet ist. An dem Zinkenhalter ist eine Mehrzahl von in Reihen angeordnete Spiralfederzinken drehbar befestigt. Durch den vorgespannten Hebelarm werden der Zinkenhalter und die Spiralfederzinken auf den zu eggenden Untergrund gedrückt. Die Egge ist dafür vorgesehen hinter einem Traktor nachgezogen zu werden.

Die US2003/0132013A1 offenbart ebenfalls eine Egge mit einem vorgespannten Hebelarm, welcher eine Mehrzahl von in Reihen angeordneten Spiralfederzinken in den zu bearbeitenden Boden gedrückt wird. Die Egge kann in Kombination mit einem Grubber eingesetzt werden und kann zu diesem Zweck an einem Grubber angekuppelt werden und hinter diesem nachgezogen werden.

In der AU78252A ist ebenfalls eine Egge beschrieben, welche lösbar mit einem Rahmenteil eines landwirtschaftlichen Geräts verbunden ist. Durch Stellschrauben an welchen die Hebelarme aufliegen, lässt sich die Eindringtiefe der Spiralfederzinken in den Boden einstellen.

### Aufgabe der Erfindung

Die Aufgabe der vorliegenden Erfindung liegt daher darin ein Anbaugerät vorzuschlagen, welches zur schonenden Säuberung, Behandlung oder Ebnung eines Untergrundes, beispielsweise eines Rasens oder einer Grünfläche geeignet ist, ohne diesen zu zerstören.

Eine weitere Aufgabe liegt darin, es zu ermöglichen, dass mit dem Anbaugerät zu säubernde Untergründe erreichbar sind, welche nicht befahrbar sind. Dazu zählen unwegsames Gelände, Untergründe mit starkem Gefälle, zu räumende Bachläufe oder Waldboden.

### Beschreibung

Aus dem Stand der Technik sind die unterschiedlichsten Anbaugeräte für eine Arbeitsmaschine, bekannt. Das Anbaugerät umfasst ein Kupplungsteil, mit welchem das Anbaugerät an der Arbeitsmaschine mechanisch ankuppelbar ist und dadurch rasch gegen ein anderes Anbauteil austauschbar ist.

Die Lösung der gestellten Aufgabe gelingt bei einem Anbaugerät dadurch, dass das Kupplungsteil ein Baggerarm-Kupplungsteil ist.

Dadurch, dass das Kupplungsteil ein Baggerarm-Kupplungsteil ist, lässt sich der Baggeranbaurechen an dem freien Ende eines Baggerarms ankuppeln. Der Baggeranbaurechen kann an jeder Position eines zu säubernden Untergrundes eingesetzt werden, welcher sich im Aktionsradius des Baggerarmes befindet. Dazu ist es nicht notwendig, dass der Untergrund befahrbar sein müsste, wie dies bei Eggen der Fall ist, welche von einem Traktor gezogen werden müssen. Der Baggerarm ermöglicht es, den Anbaurechen dreidimensional, also in alle Richtungen zu bewegen. Daher kann der Anbaurechen auf jedem Untergrund zum Abziehen des selbigen aufgesetzt werden, unabhängig davon, welches Gefälle und welche unwegsamen Geländeformen der Untergrund aufweist. Der Anbaurechen wird im Wesentlichen parallel zum Untergrund eingestellt und durch den Baggerarm in Richtung des Baggers gezogen. Dann wird der Anbaurechen angehoben und vom Bagger weg bewegt. Dann wird der Anbaurechen wieder parallel zum Untergrund ausgerichtet und abgesenkt. So kann mit dem Anbaurechen Bahn für Bahn des Untergrundes gesäubert werden.

Schwer zugängliche Untergründe können von Schwemmgut zu befreiende Bachläufe, Waldböden, welcher von Astschnitt zu befreien ist, oder steile Hänge sein. Solche schwer zugänglichen Untergründe müssen üblicherweise manuell gesäubert werden. Diese Arbeitseinsätze sind gefährlich und zeitraubend und können zu Arbeitsunfällen führen. Der Anbaurechen ermöglicht es, dass unwegsames Gelände rasch und sicher gesäubert werden kann. Der Fachmann würde eine Egge niemals derart umbauen, dass diese mit einem Bagger eingesetzt werden kann, da im bekannt ist, dass eine Egge hinter einem Traktor hergezogen wird. Zur Säuberung von unwegsamen Gelände würde an einen Bagger vielmehr ein bekanntes Anbaugerät, zum Beispiel ein Greifer, angekuppelt werden.

Durch die Anordnung der Rechenzähnen in mehreren Reihen können Rasenflächen und andere Untergründe ausgerechent werden, ohne dass der Untergrund zerstört werden würde. Vielmehr wird durch die dünnen Rechenzähne in mehreren Reihen ein Entfernen von kleineren Steinen, Moos, Heu, Unkraut und ähnlichem ermöglicht. Der Anbaurechen dient also zum Zusammenziehen von lockerem Material (Laub, Grasschnitt oder Heu) oder zum Bearbeiten des Bodens (Lockern, Reinigen von Pflanzenresten und Steinen, Ebnen und Verteilen von Erde), wofür üblicherweise ein Handrechen benötigt wird. Der erfindungsgemässe Anbaurechen führt dazu, dass mit einem Bagger ein Untergrund gerechent werden kann, wofür üblicherweise eine zusätzliche Arbeitsmaschine oder ein manueller Arbeitseinsatz benötigt wird. Das Anbaugerät ist bei der Endreinigung einer Baustelle besonders praktisch, da der Übergang zwischen einer Baustelle und einem angrenzende Rasen oder einer Wiese rasch und ohne einer zusätzlichen Arbeitsmaschine oder einem Handrechen gereinigt werden kann. Das Anbaugerät findet seinen Einsatz aber auch im Landschaftsbau, im Gartenbau oder in der Forst- und Landwirtschaft und überall dort wo grössere Flächen gerechent werden müssen. Das Anbaugerät kann aber auch zum Planieren oder Ausebenen von nicht befestigten Untergründen verwendet werden.

Die Erfindung zeichnet sich bevorzugt dadurch aus, dass die Rechenzähne einzeln an der zweiten Montagefläche befestigt sind. Falls ein Rechenzahn beschädigt wird, so kann dieser einzeln ausgetauscht werden und es muss nicht die vollständige Reihe getauscht werden.

In einer besonders bevorzugten Ausführungsform der Erfindung ist ein Rechenzahn derart drehbar an der zweiten Montagefläche vorgespannt, sodass er in Gegenrichtung einer Verschieberichtung des Anbaugeräts gegen einen Vorspannwiderstand verdrehbar ist. Als Verschieberichtung ist die Zugrichtung des Anbaugeräts zu verstehen, wenn es auf dem Untergrund abgesetzt ist und auf diesem von dem Bagger gezogen wird.

Nach Ausnutzung des Aktionsbereiches des Baggerarms wird das Anbaugerät angehoben, der Baggerarm wird ausgefahren und das Anbaugerät wird auf den Untergrund abgesenkt. Dann wird das Anbaugerät wieder abgesetzt und in Bewegungsrichtung in Richtung des Baggers gezogen. Die gefederten Rechenzähne bewirken eine besonders schonende Behandlung des Untergrundes und der Rechenzähne. Bevor die Belastung auf den Untergrund oder die Rechenzähne zu gross werden würde und folglich zu Zerstörungen des Untergrundes und/oder der Zähne führen würde, geben die Rechenzähne ab einem bestimmten Druck nach und verdrehen sich gegen die Zugrichtung des Baggeranbaurechens (Anbaugerät). Dadurch gibt der Rechenzahn nach und gleitet über zu fest am Untergrund haftende Verunreinigungen bzw. Hindernisse. Nach Überwindung des Hindernisses dreht sich der Rechenzahn selbständig in seine Grundposition zurück. Denkbar sind zur Erzielung der federnden Wirkung neben einem gebogenen Federstahl auch komprimierbare Gummipuffer oder Zugfedern aus Metall.

Als zweckdienlich hat es sich erwiesen, wenn ein Rechenzahn aus einem Federdraht besteht, welcher einen ersten und zweiten Zacken aufweist und zwischen den Zacken eine Wicklung aufweist. Dadurch, dass die Wicklung zwischen zwei Zacken angeordnet ist, kann ein Rechenzahn symmetrisch belastet und gebogen werden.

In einer weiteren bevorzugten Ausführungsform der Erfindung hat die Wicklung einen Haltebereich ausgebildet, mit welchem der Rechenzahn an der zweiten Montagefläche befestigbar ist. Durch die Befestigung des Haltebereichs bleibt dieser bei der Bewegung der Zacken unbeweglich, wodurch die Wicklung ihre federnde Wirkung entfalten kann.

Zweckrnässigerweise ist der Haltebereich dadurch ausgebildet, dass der Federdraht in U-Gestalt gebogen ist, wobei der Haltebereich in der Mitte der Wicklung ausgebildet ist, wodurch der Haltebereich die Wicklung in einen ersten und einen zweiten Wicklungsbereich unterteilt. Der Rechenzahn wird durch den symmetrischen Aufbau gleichmässig belastet. Jedem Zacken ist ein Wicklungsbereich zugeordnet, welcher die federnde Wirkung für den Zacken bereitstellt. Der Haltebereich ist durch die U-Form besonders effizient und einfach aufgebaut. Der Rechenzahn lässt sich kostengünstig herstellen, da er einstückig ist und aus einem einzelnen Federdraht gebogen ist. Neben dem Federdraht sind keine zusätzlichen Bauteile für die Herstellung des Rechenzahnes notwendig.

Als vorteilhaft erweist es sich, wenn der Federdraht einen Durchmesser zwischen 3 und 7 mm und bevorzugt zwischen 4 und 5 mm besitzt. Die Zacken sind durch diese Dimensionierung fein genug, um auch kleineres lockere Material zu erfassen und den Untergrund davon zu reinigen.

Als vorteilhaft erweist es sich auch, wenn der Abstand benachbarter Zacken einer Reihe zwischen 50 und 70 mm und bevorzugt zwischen 55 und 65 mm beträgt. Auch dieser gewählte Abstand bewirkt, dass der Baggeranbaurechen kleineres lockeres Material erfassen kann und den Untergrund davon reinigt. Es versteht sich, dass sowohl der Durchmesser des Federdrahtes als auch der Abstand benachbarter Zacken an die Anforderungen anzupassen sind. Ist das lose Material grösser und schwerer so muss der Durchmesser des Federdrahtes und der Abstand der Zacken vergrössert werden und vice versa.

In einer weiteren bevorzugten Ausführungsform der Erfindung ist der Grundkörper eine Montageplatte mit einer rechteckigen Form mit einer ersten und zweiten gegenitberliegenden Längsseite und einer ersten und zweiten gegenüberliegenden Breitseite. Durch die rechteckige Form haben mehrere Reihen von Rechenzähnen an der zweiten Montagefläche ausreichend Platz. Die Länge und Breite sind an den jeweiligen zu reinigenden Untergrund anzupassen. Denkbar sind auch andere geometrische Formen der Montagplatte, beispielsweise ein Trapez oder ein Dreieck, bei welchem die Reihen von Zähnen gegen die Bewegungsrichtung kürzer werden.

Zweckmässigerweise ist eine Reihe von Rechenzähnen dadurch gebildet, dass eine Mehrzahl von Rechenzähnen nebeneinander in Richtung der Längsseiten befestigt ist. Da die Rechenzähne alle einzeln montiert sind, ist es auch möglich, dass die Abstände der Rechenzähne zwischen den einzelnen Reihen variieren. So können die benachbarten Rechenzähne der ersten Reihe in Bewegungsrichtung einen grösseren Abstand aufweisen als die folgenden Reihen. So kann eine Art Filterwirkung für das lose Material bei dem Baggeranbaurechen erzielt werden.

Die Erfindung zeichnet sich auch bevorzugt dadurch aus, dass die Reihen von Rechenzähnen zueinander versetzt sind. Die Rechenwirkung lässt sich durch dieses Anordnungsmuster der Rechenzähne verbessern. Der horizontale Abstand zwischen einem Zacken einer Reihe und einem Zacken der dahinterliegenden Reihe kann daher kleiner sein, als der Abstand benachbarter Zähne einer Reihe. Beispielsweise beträgt der horizontale Abstand eines Zackens und dem nächstliegenden Zacken der dahinterliegenden Reihe zwischen 10 und 20 mm und bevorzugt zwischen 13 und 18 mm.

Als verteilhaft erweist es sich, wenn die Enden der Zacken in Richtung der Verschieberichtung des Anbaugerätes abgewinkelt sind. Die Rechenzähnen erhalten durch die Abwinkelung der Zacken eine schaufelnde Wirkung und können mehr loses Material zusammenschieben als ohne eine Abwinkelung.

In einer weiteren bevorzugten Ausführungsform der Erfindung sind an der zweiten Montagefläche Kanäle ausgebildet, in welchen die Wicklungen aufgenommen sind. Da die Wicklungen an den Kanalwänden anliegen, sind die einzelnen Rechenzähne zusätzlich zu ihrer Befestigung an der zweiten Montagefläche stabilisiert. Die Kanäle verhindern auch, dass sich die Rechenzähne um die Befestigungsschrauben verdrehen. Denkbar sind auch Rohre, auf welche die Wicklungen der Rechenzähne aufgesteckt werden können. Die Rohre stabilisieren die Rechenzähne zusätzlich zu der Befestigung an der zweiten Montagefläche und können auch verhindern, dass sich die Rechenzähne um die Schrauben, mit denen sie an der Montageplatte befestigt sind, verdrehen.

Zweckm.ässigerweise sind die Kanäle dadurch gebildet, dass an der zweiten Montagefläche eine Mehrzahl von voneinander beabstandeter Profile angeordnet ist. Die Profile ermöglichen es, dass die Kanäle zur Aufnahme der Rechenzähne ohne grossen Aufwand gebildet werden können. Die Profile verstärken zusätzlich die Gesamtkonstruktion des Anbaugeräts. Denkbar sind U- Profile oder Rechteck-Profile.

In einer weiteren besonders bevorzugten Ausführungsform der Erfindung ist entlang der ersten Längsseite eine Abziehleiste angeordnet. Wenn der Baggeranbaurechen in Richtung der Vertikalen an dem Baggerarm aufgestellt wird, so kann die Abziehleiste an dem Untergrund aufgesetzt werden und an den Bagger herangezogen werden. Mithilfe der Abziehleiste lässt sich der Untergrund glätten und kleinere nach dem Einsatz der Rasenzähne noch vorhandene Verunreinigungen zusammenschieben.

Als vorteilhaft erweist es sich, wenn entlang der zweiten Längsseite ein Schutzvorhang angeordnet ist. Der Schutzvorhang verhindert, dass lockeres Material des Untergrundes nicht an die Baggerkabine geschleudert wird. Das Abspringen von losem Material kann insbesondere durch die federnde Wirkung der Rechenzähne auftreten.

Bevorzugt ist es, wenn das Kupplungsteil auswechselbar an der ersten Montagefläche befestigt ist. Dadurch lassen sich Kupplungsteile der unterschiedlichsten (Schnell)kupplungssysteme an dem Baggeranbaurechen befestigen. Der Baggeranbaurechen lässt sich daher äusserst flexibel einsetzen, da er mit den unterschiedlichsten Kupplungssystemen verwendbar ist.

In einer weiteren bevorzugten Ausführungsform der Erfindung umfasst das Kupplungsteil zwei im Wesentlichen parallel angeordneten Bolzen und zwei Stege, welche der Aufnahme der Bolzen dienen und mittels derer die Bolzen an dem Anbaugerät gehalten sind. Diese Ausführung eines Kupplungsteils ist weit verbreitet, wobei die zwei Bolzen mit den Klauen einer am freien Ende des Baggerarms vorgesehenen Schnellwechselkupplung zusammenwirken können. Es ist vorgesehen, dass zwischen die Bolzen die feststehende und die bewegliche Klaue des an dem freien Ende des Baggerarms befestigten Kupplungsteils der Schnellwechselkupplung greifen.

Ein weiterer Aspekt der Erfindung betrifft einen Baggerarm an welchen ein oben beschriebener Baggeranbaurechen mittels dem Baggerarm-Kupplungsteil an der Kupplung des Baggerarms angekuppelt ist.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine axonometrische Ansicht von schräg oben auf einen Baggeranbaurechen;
- Figur 2:: eine axonometrische Ansicht von schräg unten auf den Baggeranbaurechen aus Figur 1;
- Figur 3:: eine Frontansicht auf den Baggeranbaurechen;
- Figur 4:: eine Schnittansicht entlang der Schnittlinie IV-IV;
- Figur 5:: eine Seitansicht des Baggeranbaurechens
- Figur 6:: eine Draufsicht auf den Baggeranbaurechen;
- Figur 7:: eine Explosionsdarstellung des Baggeranbaurechens;
- Figur 8:: eine axonometrische Ansicht von schräg unten auf den Baggeranbaurechen aus Figur 1 in einer weiteren Ausführungsform und
- Figur 9:: die Detailansicht eines Rechenzahns.

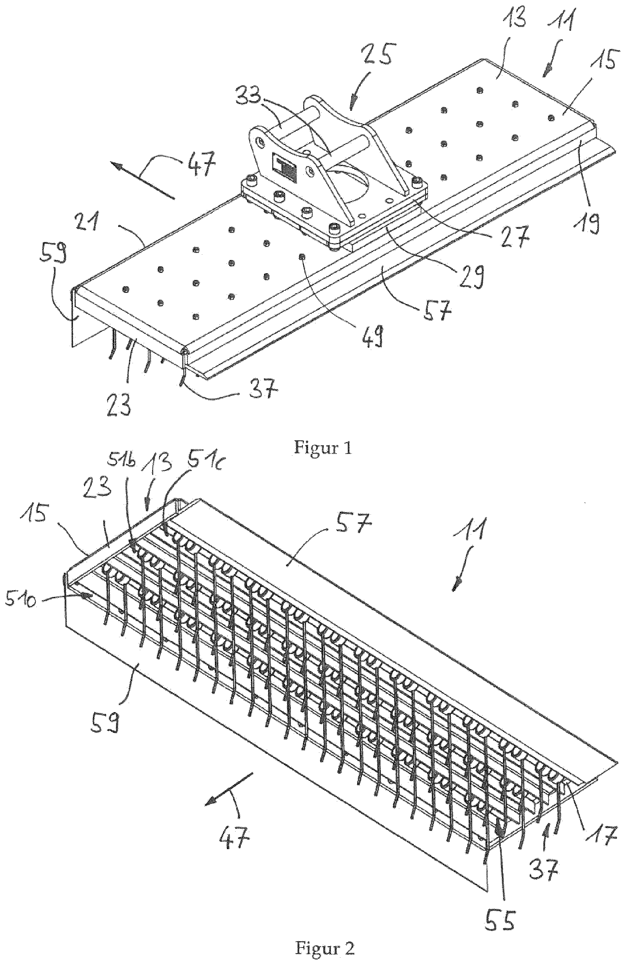

In den Figuren 1 bis 8 ist ein Anbaugerät in Gestalt eines Baggeranbaurechens 11 gezeigt. Der Baggeranbaurechen 11 lässt sich an den Baggerarm eines Baggers mit einer bekannten Schnellwechselkupplung mechanisch ankuppeln. Der Baggeranbaurechen 11 kann auch als Rasenrechen bezeichnet werden, da er sich sehr gut zur Rasenreinigung eignet.

Der Baggeranbaurechen 11 umfasst eine Montageplatte 13 mit einer nach oben orientierten ersten Montagefläche 15 und einer nach unten orientierten zweiten Montagefläche 17. Bevorzugt hat die Montagplatte 13 eine rechteckige Form mit einer ersten und zweiten Längsseite 19,21 und zwei Breitseiten 23.

Ein Kupplungsteil 25 ist an der ersten Montagefläche 15 befestigt. Um das Kupplungsteil 25 gegen ein anderes Kupplungsteil austauschen zu können ist dieses auswechselbar an einer Adapterplatte 27 angeschraubt. Die Adapterplatte 27 ist an der ersten Montagefläche 15 bevorzugt angeschweisst. Bevorzugt ist die Adapterplatte 27 von der ersten Montagefläche 15 mit zwei Distanzstücken 29 beabstandet, damit in dem gebildeten Abstand Schraubenmuttern 31 zur Befestigung des ersten Kupplungsteils 25 Platz finden.

Bevorzugt umfasst das Kupplungsteil 25 zwei parallel angeordneten Bolzen 33 und zwei Stege 35, welche der Aufnahme der Bolzen dienen. Mit den Stegen 35 sind die Bolzen 33 an dem Baggeranbaurechen 11 gehalten. An den Bolzen 33 können die Klauen eines zweiten Kupplungsteils einer Schnellwechselkupplung (in den Figuren nicht gezeigt) angreifen, um den Baggeranbaurechen 11 an einem Baggerarm ankuppeln zu können.

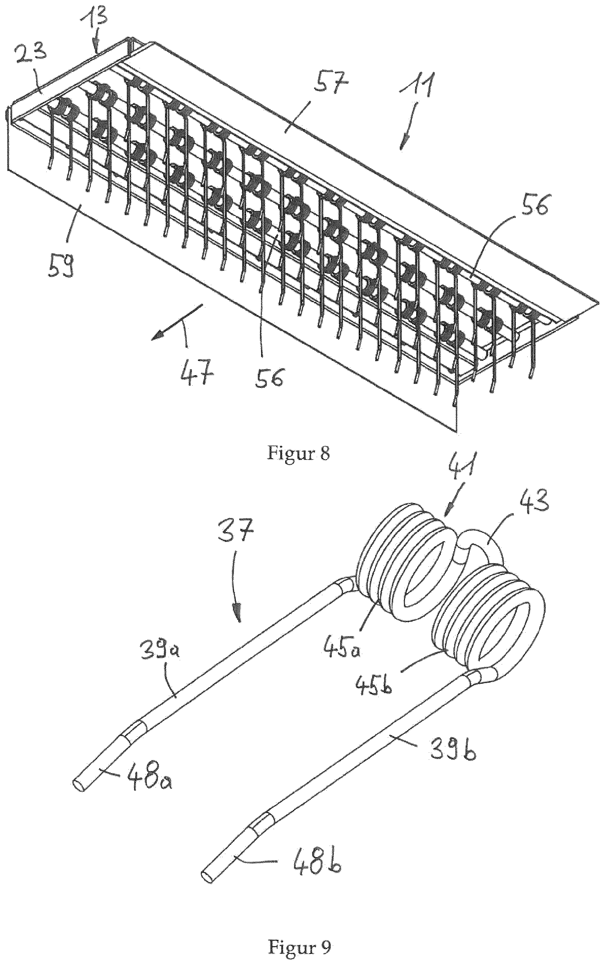

An der zweiten Montagefläche 17 ist eine Mehrzahl von Rechenzähnen 37, bevorzugt einzeln, befestigt. In der Figur 9 ist ein Rechenzahn 37 im Detail gezeigt. Der Rechenzahn 37 ist aus einem Federdraht gebogen und besitzt einen ersten und einen zweiten Zacken 39a,39b, welche durch die Enden des Federdrahts gebildet sind. Die Dicke des Federstahls beträgt bevorzugt zwischen 4 und 5 mm. Zwischen den Zacken 39a,39b besitzt der Draht eine Wicklung 41. Innerhalb der Wicklung 41 ist der Draht als ein U-förmiger Haltebereich 43 gebogen. Der Haltebereich 43 ist von einem ersten und einen zweiten Wicklungsbereich 45a,45b flankiert. Durch den Haltebereich 43 kann eine Schraube 49 geführt werden und der zweizackige Rechenzahn 37 kann mit der Schraube 49 an der zweiten Montagefläche 17 angeschraubt werden. Da der Haltebereich 43 unbeweglich mit der zweiten Montagefläche 17 verbunden ist, wirken der erste und zweite Wicklungsbereich 45a,45b jeweils als eine Feder. Der Abstand des ersten und zweiten Zackens 39a,39b beträgt bevorzugt zwischen 55 und 65 mm, weil dieser Abstand es sicher stellt, dass ein Untergrund ausreichend von kleineren Steinen und anderen typischen losen Verunreinigungen, welche am Rand eines Baustellengebiets typischerweise auftreten, gesäubert werden kann. Die weiter unten beschriebene Versetzung der Zahnreihen führt zu einer weiteren Verbesserung der Fähigkeit des Anbaugeräts 11 Verunreinigungen bis zu einer bestimmten Grösse möglichst vollständig aus einem Untergrund zu rechen.

Werden die Zacken 39a,39b auf dem Untergrund aufgesetzt und in einer Verschieberichtung 47 des Baggeranbaurechens 11 gezogen so drehen sich die Zacken 39a,39b entgegen der Verschieberichtung um die Wicklung 41. Damit ist sichergestellt, dass die Zacken 39a,39b nicht überbelastet werden, da sie sich ab einem bestimmten Widerstand verbiegen können und nicht abbrechen. Der Widerstand kann durch Hindernisse wie Steine entstehen oder durch Pflanzen bzw. Wurzeln, welche besonders fest mit dem Untergrund verwachsen sind. Bevor die Zacken hängen bleiben, verbiegen sie sich solange gegen die Bewegungsrichtung 47, bis sie über das Hindernis gleiten. Die Wirksamkeit des Rechenzahnes 37 ist dadurch verbessert, dass die offenen Enden 48a,48b der Zacken 39a,39b in Richtung der Verschieberichtung 47 abgewinkelt sind. Dabei schliesst ein offenes Ende 48 mit dem Rest des Zackens einen stumpfen Winkel von bevorzugt zwischen 160 und 170 Grad ein.

Die Verschieberichtung 47 ist bevorzugt dadurch definiert, dass der Bagger den Baggeranbaurechen 11 mit Hilfe des Baggerarms zu sich zieht. Dadurch kann im Aktionsradius des Baggerarms ein Untergrund, insbesondere eine Wiese oder der Übergang eines Baustellenbereichs zu einer angrenzenden Fläche von losen Verunreinigungen befreit werden. Die Verunreinigungen, wie kleinere Steine, Heu oder abgestorbene Pflanzen werden von dem Baggeranbaurechen 11 in Richtung des Baggers geschoben bzw. gezogen. Ist der Aktionsradius des Baggerarms ausgenutzt, so fährt der Bagger weiter, um den Aktionsradius des Baggerarms für den Baggeranbaurechen 11 an einem anderen Bereich des Untergrunds auszunutzen.

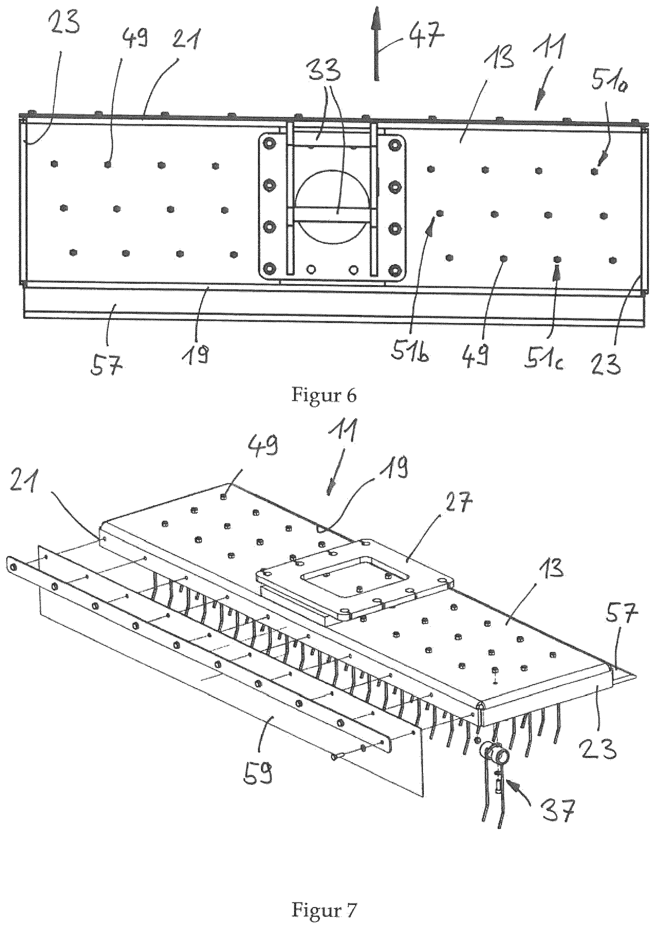

Wie insbesondere in den Figuren 2 und 7 gezeigt, sind die Rechenzähne 37 einzeln an der zweiten Montagefläche 17 mit Schrauben 49 angeschraubt. Die Schraube 49 wird durch den Haltebereich 43 hindurchgeführt, wodurch der Haltebereich 43 unbeweglich ist und der erste und zweite Wicklungsbereich 45a,45b ihre federnde Wirkung entfalten können. Die Rechenzähne 37 können separat ausgetauscht werden, falls sie beschädigt sind. Es bestehen auch andere Möglichkeiten der Befestigung der Rechenzähne 37. Beispielsweise können sie an der zweiten Montagefläche 17 angenietet sein oder auf eine Achse aufgesteckt sein. Mehrere mit Rechenzähnen 37 bestückte Achsen können auch an der zweiten Montagefläche 17 hintereinander in mehreren Reihen angeordnet werden. Die Achsen können als Rohre 56 ausgebildet sein, wie dies in Figur 8 gezeigt ist. Ein Rohr 56 wird durch die Wicklungen 41 mehrerer Rechenzähne gesteckt. Sowohl die Kanäle 55 als auch die Rohre 56 stabilisieren und verstärken die Halterung der Rechenzähne 37 an der Montageplatte 13. Die Kanäle 55 und die Rohre 56 verhindern auch, dass die Rechenzähne 37 um die Schrauben 49 verdrehbar sind.

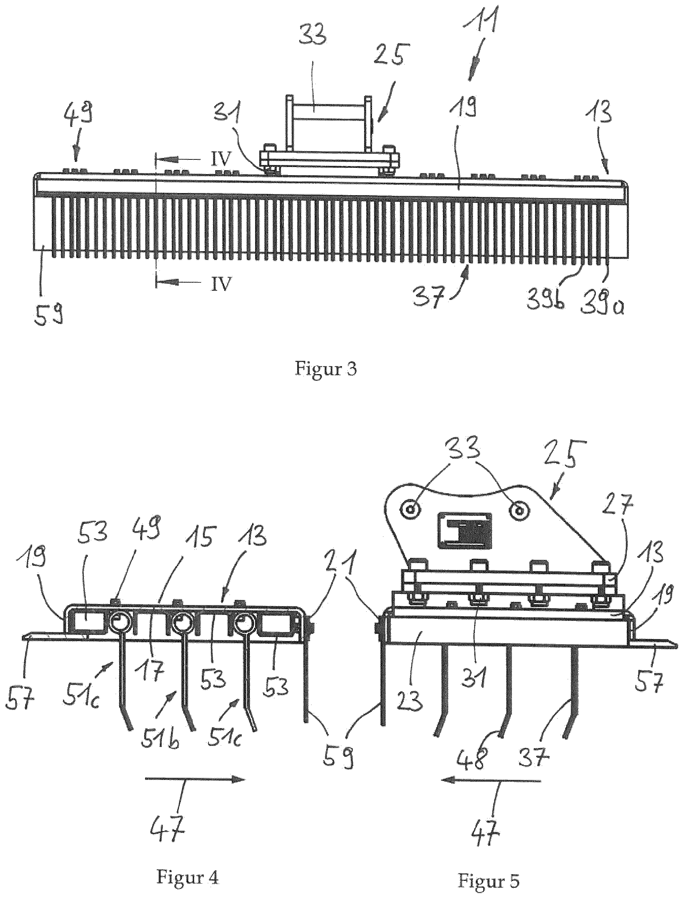

Die Rechenzähne 37 sind nebeneinander entlang der Längsseiten 19,21 in mehreren Reihen 51 befestigt. In dem dargestellten Ausführungsbeispiels sind drei Reihen 51a,51b,51c dargestellt. Falls es der Einsatzzweck des Baggeranbaurechens 11 erfordert, können aber auch mehr oder weniger als drei Reihen vorgesehen sein. Bevorzugt sind die Reihen 51a,51b,51c zueinander versetzt. Bevorzugt beträgt das Mass der Versetzung zwischen 5 und 10 mm. Die Versetzung bewirkt, dass die Verunreinigungen bis zu einer bestimmten Grösse grösstenteils aus dem Untergrund zusammengerechent werden können. Die Versetzung der Reihen 51 ist am besten an der Stellung der Schraubenreihen in Figur 6 erkennbar. Der horizontale Abstand zwischen einem Zacken einer Reihe und einem Zacken der dahinterliegenden Reihe kann daher kleiner sein, als der Abstand benachbarter Zähne einer Reihe. Beispielsweise beträgt der horizontale Abstand eines Zackens und dem nächstliegenden Zacken der dahinterliegenden Reihe zwischen 10 und 20 mm und bevorzugt zwischen 13 und 18 mm. In der Seitenansicht der Figur 3 ist gezeigt, dass zwischen den Zacken 39a,39b eines Rechenzahns 37 die dahinterliegenden Zacken von versetzten Rechenzähnen sichtbar werden. Der in Figur 3 gezeigte Abstand benachbarter Zacken beträgt daher bei drei Reihen ein Drittel des Abstands der Zacken 39a,39b eines Rechenzahnes 37.

An der zweiten Montagefläche 17 sind Profile 53 befestigt, wodurch zwischen den Profilen Kanäle 55 ausgebildet sind. Die Anzahl der Kanäle 55 entspricht der Anzahl der Reihen 51. In den Kanälen 55 sind die Rechenzähne 37 aufgenommen. Die Kanäle 55 bewirken die Stabilisierung der Rechenzähne 37, da die Wicklungen 41 an den Kanalwänden gestützt sind.

An der ersten Längsseite ist eine Abziehleiste 57 befestigt. Wird der Baggeranbaurechen 11 in Richtung der Vertikalen an dem Baggerarm aufgestellt, so kann die Abziehleiste 57 zum Ebnen des zuvor mit dem Baggeranbaurechen 11 gereinigten Untergrundes dienen.

An der zweiten Längsseite 21 ist ein Schutzvorhang 59 angeordnet, welcher verhindert, dass Steine und Geröll an den Bagger, insbesondere die Fahrerkabine geschleudert werden.

### Legende:

- 11: Baggeranbaurechen, Rasenrechen
- 13: Montageplatte
- 15: Erste Montagefläche
- 17: Zweite Montagefläche
- 19: Erste Längsseite
- 21: Zweite Längsseite
- 23: Breitseiten
- 25: Kupplungsteil
- 27: Adapterplatte
- 29: Distanzstücke
- 31: Schraubenmuttern
- 33: Bolzen
- 35: Stege
- 37: Rechenzähne
- 39a,39b: Erster und zweiter Zacken
- 41: Wicklung
- 43: Haltebereich
- 45a,45b: Erster und zweiter Wicklungsbereich
- 47: Verschieberichtung
- 48a,48b: Offene Enden der Zacken
- 49: Schrauben
- 51a,51b,51c: Reihen von Rechenzähnen
- 53: Profile
- 55: Kanäle
- 56: Rohre
- 57: Abziehleiste
- 59: Schutzvorhang

## Patentansprüche

1. Baggeranbaurechen (11) umfassend
- ein Kupplungsteil (25), mit welchem das Anbaugerät (11) an einer Arbeitsmaschine mechanisch ankuppelbar ist, und
- einen Grundkörper (13) mit einer ersten und einer zweiten Montagfläche (15,17), wobei
- an der ersten Montagefläche (15) das Kupplungsteil (25) angeordnet ist und an der zweiten Montagefläche (17) Rechenzähne (37) befestigt sind, welche in einer Mehrzahl von Reihen (51a,51b,51c) angeordnet sind,
**dadurch gekennzeichnet,**
**dass** das Kupplungsteil ein Baggerarxn-Kupplungsteil (25) ist.

2. Baggeranbaurechen nach Anspruch 1, **dadurch gekennzeichnet, dass** das Baggerarm-Kupplungsteil (25) derart ausgebildet ist, dass es am freien Ende eines Baggerarms ankuppelbar ist.

3. Baggeranbaurechen nach Anspruch 1 oder 2, **dadurch gekennzeichnet, dass** das Baggerarm-Kupplungsteil (25) zwei im Wesentlichen parallel angeordnete Bolzen (33) und zwei Stege (35), welche der Aufnahme der Bolzen (33) dienen und mittels derer die Bolzen (33) an dem Anbaurechen(11) gehalten sind, umfasst, wobei die zwei Bolzen (33) mit den Klauen einer am freien Ende des Baggerarms vorgesehenen Schnellwechselkupplung zusammenwirken können.

4. Baggeranbaurechen nach einem der vorangehenden Ansprüche, **dadurch gekennzeichnet, dass** ein Rechenzahn (37) derart drehbar an der zweiten Montagefläche (17) vorgespannt ist, sodass er in Gegenrichtung einer Verschieberichtung (47) des Anbaugeräts (11) gegen einen Vorspannwiderstand verdrehbar ist.

5. Baggeranbaurechen nach einem der vorangehenden Ansprüche, **dadurch gekennzeichnet, dass** ein Rechenzahn (37) aus einem Federdraht besteht, welcher einen ersten und zweiten Zacken (39a,39b) aufweist und zwischen den Zacken (39a,39b) eine Wicklung (41) aufweist.

6. Baggeranbaurechen nach Anspruch 5, **dadurch gekennzeichnet, dass** die Wicklung (41) einen Haltebereich (43) ausgebildet hat, mit welchem der Rechenzahn (37) an der zweiten Montagefläche (17) befestigbar ist.

7. Baggeranbaurechen nach Anspruch 6, **dadurch gekennzeichnet, dass** der Haltebereich (43) dadurch ausgebildet ist, dass der Federdraht in U-Gestalt gebogen ist, wobei der Haltebereich (43) in der Mitte der Wicklung (41) ausgebildet ist, wodurch der Haltebereich (43) die Wicklung (41) in einen ersten und einen zweiten Wicklungsbereich (45a,45b) unterteilt.

8. Baggeranbaurechen nach einem der Ansprüche 5 bis 7, **dadurch gekennzeichnet, dass** der Abstand benachbarter Zacken (39a,39b) einer Reihe zwischen 50 und 70 mm und bevorzugt zwischen 55 und 65 mm beträgt.

9. Baggeranbaurechen nach einem der vorangehenden Ansprüche, **dadurch gekennzeichnet, dass** der Grundkörper eine Montageplatte (13) mit einer rechteckigen Form mit einer ersten und zweiten gegenüberliegenden Längsseite (19,21) und einer ersten und zweiten gegenüberliegenden Breitseite (23) ist.

10. Baggeranbaurechen nach einem der vorangehenden Ansprüche, **dadurch gekennzeichnet, dass** die Reihen (51a,51b,51c) von Rechenzähnen (37) zueinander versetzt sind.

11. Baggeranbaurechen nach einem der vorangehenden Ansprüche, **dadurch gekennzeichnet, dass** an der zweiten Montagefläche (17) Kanäle (55) ausgebildet sind, in welchen die Wicklungen (41) aufgenommen sind.

12. Baggeranbaurechen nach Anspruch 11, **dadurch gekennzeichnet, dass** die Kanäle (55) dadurch gebildet sind, dass an der zweiten Montagefläche (17) eine Mehrzahl von voneinander beabstandeter Profile (53) angeordnet ist.

13. Baggeranbaurechen nach einem der Ansprüche 9 bis 12, **dadurch gekennzeichnet, dass** entlang der ersten Längsseite (19) eine Abziehleiste (57) angeordnet ist.

14. Baggeranbaurechen nach einem der Ansprüche 9 bis 13, **dadurch gekennzeichnet, dass** entlang der zweiten Längsseite (21) ein Schutzvorhang (57) angeordnet ist.

15. Baggerarm umfassend
- wenigsten einen ersten und zweiten Hebelarm, welche gelenkig miteinander verbunden sind, wobei der erste Hebelarm gelenkig mit einem Bagger verbindbar ist, und
- einer Kupplung, welche am freien Ende des zweiten Hebelarms gelenkig angeordnet ist und der Ankupplung von Anbaugeräten an den Baggerarm dient,
**weiter gekennzeichnet durch**
einen Baggeranbaurechen (11) gemäss einem der vorangehenden Ansprüche, welcher mit dem Baggerarm-Kupplungsteil (25) an der Kupplung angekuppelt ist.
